Europäisches Patentamt

European Patent Office

Office européen des brevets

(19)

(11) Numéro de publication : **0 097 064**
**B1**

(12)

# FASCICULE DE BREVET EUROPÉEN

(45) Date de publication du fascicule du brevet :
06.07.88

(51) Int. Cl.⁴ : **G 03 B 11/00**

(21) Numéro de dépôt : **83400614.0**

(22) Date de dépôt : **24.03.83**

(54) **Module porte-accessoires pour appareil optique.**

(30) Priorité : **29.03.82 FR 8205301**

(43) Date de publication de la demande :
**28.12.83 Bulletin 83/52**

(45) Mention de la délivrance du brevet :
**06.07.88 Bulletin 88/27**

(84) Etats contractants désignés :
**AT BE CH DE FR GB IT LI LU NL SE**

(56) Documents cités :
**EP-A- 0 004 246**
**CH-A-   258 866**
**DE-C-   967 274**
**GB-A- 2 074 330**
**US-A- 4 137 540**
**US-A- 4 302 078**

(73) Titulaire : **Alfille, Jules Maurice**
**13 Résidence des Mourinoux Avenue de la Redoute**
**F-92600 Asnieres (FR)**

(72) Inventeur : **Alfille, Jules Maurice**
**13 Résidence des Mourinoux Avenue de la Redoute**
**F-92600 Asnieres (FR)**

Jouve, 18, rue St-Denis, 75001 Paris, France

EP 0 097 064 B1

## Description

La présente invention a pour objet un ensemble modulaire permettant de mettre en place divers accessoires sur un objectif d'appareil optique tel qu'appareil de prises de vues photographiques ou cinématographiques mais également sur des appareils de reproduction d'images, aussi bien utilisés par le grand public que par les professionnels. Ainsi, cet ensemble modulaire peut être utilisé sur des appareils d'optique scientifiques, des lunettes astronomiques, des appareils de télévision et, d'une manière générale, tout nouvel appareil pouvant enregistrer ou reproduire l'image.

Dans ce domaine on connaît déjà par le document GB-A-2 074 330 un porte-accessoires qui est essentiellement constitué de tiroirs dans lesquels sont disposés des éléments par exemple des filtres. Mais cette disposition ne permet pas de régler et d'orienter à volonté ces éléments dans différentes positions, le nombre de combinaisons et de possibilités se trouve ainsi limité.

Le dispositif de l'invention peut être utilisé lors de la prise de vue ou d'observation de phénomènes astronomiques, de phénomènes naturels divers afin de pouvoir disposer devant l'objectif d'observation un ou plusieurs accessoires, par exemple des filtres présentant des propriétés optiques particulières, ou même de pouvoir apporter une « touche personnalisée » à la prise de vue.

En considération du prix de revient à la fabrication, de la minimisation de l'investissement chez le client, ainsi que pour satisfaire les souhaits de chaque utilisateur, il est nécessaire que le dispositif permette la mise en place instantanée d'un ensemble modulaire s'adaptant sur tout appareil optique. De plus, le dispositif de l'invention peut être produit en grande série afin d'obtenir des prix de revient très intéressants.

Plus particulièrement, la présente invention a pour but de réaliser un module porte-accessoires permettant de contenir essentiellement une pluralité d'accessoires optiques, les uns à côté des autres, perpendiculairement aux trajets des faisceaux lumineux à traiter, et de plus de pouvoir réaliser un ensemble de plusieurs modules s'assemblant sans difficulté les uns avec les autres afin de pouvoir réaliser éventuellement une infinité de combinaisons d'accessoires en série pour traiter les faisceaux lumineux, avant qu'ils pénètrent, par exemple, dans la chambre noire de l'appareil de prise de vue photographique ou cinématographique ou analogue.

Plus précisément la présente invention a pour objet un module porte-accessoires pour appareil optique du type appareil photographique, comprenant deux plaques, des moyens pour maintenir lesdits plaques sensiblement en regard l'une de l'autre et sensiblement parallèles entre elles, à une certaine distance l'une de l'autre pour former un espace réceptacle, chaque plaque comportant une ouverture, les deux ouvertures étant sensiblement sur un même axe optique, des premiers moyens d'emboîtage mâles et des seconds moyens d'emboîtage femelles complémentaires desdits premiers moyens d'emboîtage mâles, lesdits premiers et seconds moyens d'emboîtage étant disposés respectivement sur chaque face desdites plaques tournée vers l'extérieur par rapport audit espace réceptacle, caractérisé par le fait qu'il comprend, en outre, des moyens de maintien élastiques longitudinaux situés respectivement sur les faces des deuxdites plaques tournées vers l'intérieur dudit réceptacle de façon à maintenir par pincement lesdits accessoires entre les deux plaques dans ledit espace réceptacle.

D'autres caractéristiques et avantages de la présente invention apparaîtront au cours de la description suivante donnée en regard des dessins annexés, à titre illustratif mais nullement limitatif, dans lesquels :

— la figure 1 représente, vu en coupe, un ensemble de deux ensembles modulaires selon l'invention,

— la figure 2 représente, vu en perspective, partiellement écorché, un ensemble modulaire selon l'invention, comportant un filtre optique composite, pour faire ressortir certains avantages et caractéristiques structurelles de cet ensemble.

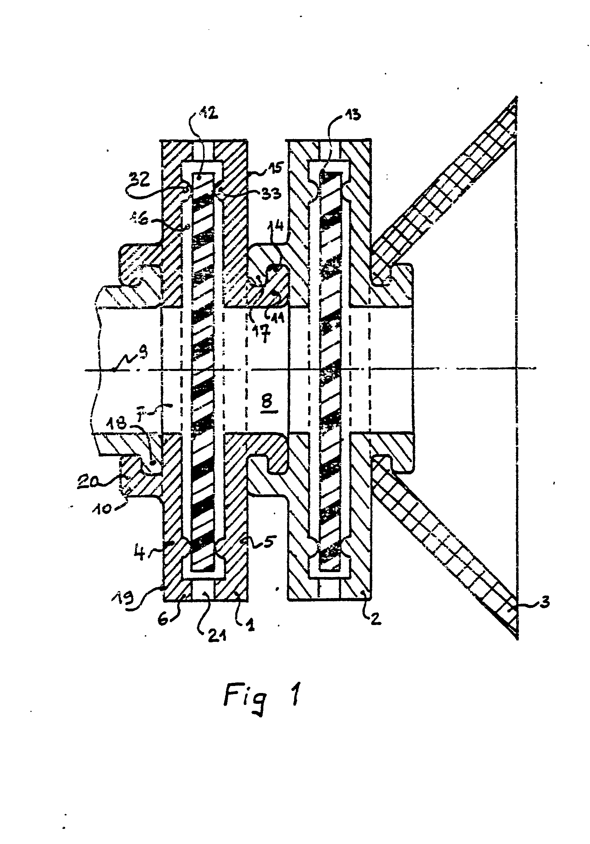

En considérant plus particulièrement la figure 1, celle-ci représente deux ensembles modulaires identiques assemblés 1 et 2, suivis d'un pare-soleil 3 pour appareil photographique. Un ensemble modulaire comme l'ensemble 1 comprend deux plaques 4 et 5 avantageusement sensiblement planes, maintenues à une certaine distance l'une de l'autre par des moyens du type entretoise 6 qui peuvent être dans le même matériau que celui des plaques 4 et 5, par exemple une matière plastique, ce qui permet de réaliser simultanément les plaques 4 et 5 et les entretoises 6.

Chaque plaque 4 et 5 comporte, sensiblement en son centre, une ouverture ; les ouvertures respectivement 7 et 8 sont avantageusement circulaires, mais pas obligatoirement, et centrées sur un même axe dit optique 9.

De plus, chaque plaque 4 et 5 comporte respectivement des moyens d'emboîtage du type femelle 10 et du type mâle 11. Ces deux moyens sont complémentaires l'un de l'autre, pour pouvoir, d'une façon classique, s'accoupler entre eux. Cette structure est avantageuse car elle permet, avec un seul mode de réalisation d'un élément modulaire, d'en assembler, par empilage des uns sur les autres, une pluralité, deux étant représentés sur la figure 1, pour constituer un ensemble de plusieurs accessoires optiques comme des filtres, des polariseurs, des occulteurs, etc., représentés schématiquement en 12 et 13.

Dans un mode de réalisation avantageux, ces moyens d'emboîtement mâles 11 sont constitués par une partie circulaire recourbée en saillie vers l'extérieur 14 située à une distance « e » de la face 15 de la plaque 5, face tournée vers l'extérieur par rapport à l'espace 16 défini entre les deuxdites plaques 4 et 5. Cette partie en saillie forme donc une gorge circulaire 17.

Les moyens d'emboîtement femelles 10 sont constitués par une gorge circulaire 18 située sur la face 19 de l'autre plaque 4 tournée vers l'extérieur par rapport à l'espace 16 défini ci-dessus. Cette gorge est en fait délimitée par une bordure en saillie 20, tournée vers l'intérieur à une distance « e » de la face 19, et de ce fait pourra coopérer par emboîtement avec une gorge circulaire, comme la gorge circulaire 17 définie ci-dessus, d'un autre ensemble modulaire porte-accessoires.

De plus, les parties en saillie et en gorge circulaire sont avantageusement centrées sur l'axe optique 9 défini ci-dessus, en entourant les ouvertures 7, 8. Cette forme circulaire permet de pouvoir faire pivoter un ensemble modulaire porte-accessoires par rapport à un autre autour de l'axe optique 9. Ces formes circulaires peuvent être, bien entendu, de forme continue ou réalisées par des segments qui définissent quand même une forme circulaire. Par contre, si cette forme continue circulaire est complètement fermée, elle pourra avantageusement permettre d'obtenir une rotation totale de 360° de deux éléments modulaires porte-accessoires l'un par rapport à l'autre.

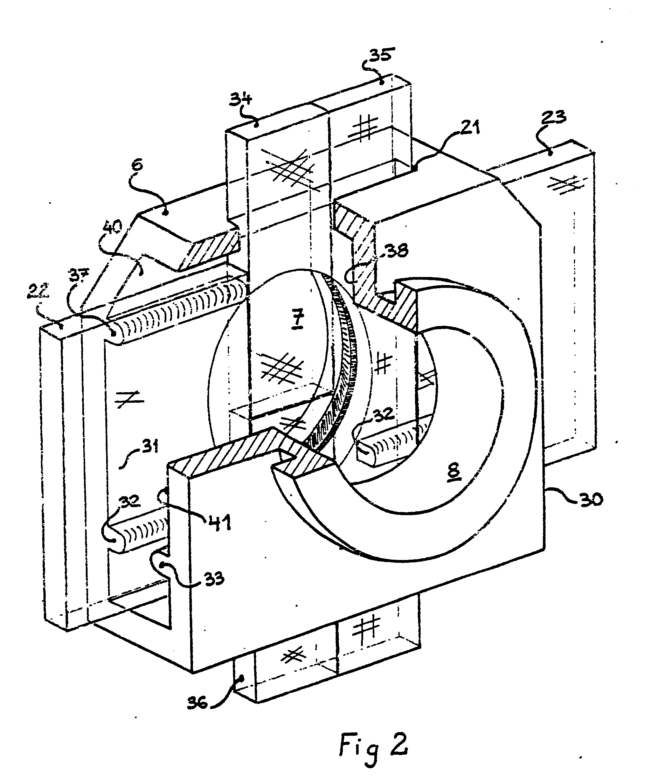

Comme mentionné précédemment, les deux plaques 4 et 5 sont situées à une certaine distance l'une de l'autre pour former le réceptacle 16. Ce réceptacle 16 peut recevoir des accessoires optiques comme des filtres, polariseurs, occulteurs totaux, ou partiels, ou programmables. Ces éléments sont très généralement plats et introduits dans le réceptacle par des ouvertures latérales par exemple 30, 31... (figure 2).

Ces accessoires sont maintenus fixement par pincement par des moyens élastiques longitudinaux situés dans le réceptacle et qui ont avantageusement une longueur de coopération égale ou supérieure à la longueur maximale des ouvertures 7 et 8 des plaques 4 et 5. Ces moyens sont constitués, par exemple, par des bourrelets 32 et 33, en regard l'un de l'autre, et solidaires respectivement des faces des plaques 4 et 5 tournées vers l'intérieur du réceptacle 16. Ces deux bourrelets définissent entre eux un espace légèrement inférieur à l'épaisseur des plaques d'accessoires. Ceci fait qu'en réalisant les plaques 4 et 5 en un matériau relativement résilient, l'introduction des accessoires dans le réceptacle entre les bourrelets produit l'écartement de ceux-ci qui, par élasticité, pincent ces accessoires 12, 13 (figure 1). De plus, les entretoises 6 reliant les plaques 4 et 5 délimitent avantageusement au moins une ouverture 21 permettant l'introduction d'une pluralité d'accessoires 34, 35, 36 dans le même plan que les accessoires 22, 23 (figure 2). Cette dernière disposition d'accessoires dans des appareils photographiques permet d'obtenir des effets spéciaux, comme des décompositions de couleur dans les images.

Les modes de réalisation qui ont été donnés ci-dessus en regard des figures 1 et 2 l'ont été pour illustrer un exemple de moyen d'emboîtement du type mâle-femelle. De même les dessins ont été exagérés dans leur échelle, pour bien faire ressortir la structure et les avantages d'un tel emboîtement. Il est bien évident que d'autres types d'emboîtement mâle-femelle peuvent être utilisés, à condition qu'ils puissent, d'une part, permettre un assemblage par emboîtage relativement fixe par pression élastique donnée par tout moyen, notamment par ressorts ou élasticité naturelle du matériau dans lequel sont réalisés ces moyens d'emboîtement, et d'autre part, permettre un désassemblage en exerçant une pression sur un module par rapport à un autre pour le désolidariser de ces voisins.

Bien entendu, il peut aussi être prévu un moyen de couplage d'adaptation pour pouvoir associer un tel module à l'objectif d'un appareil optique. Ce moyen de couplage d'adaptation peut comporter une pièce comprenant sur une face un moyen d'accrochage à l'objectif et sur l'autre face un moyen d'emboîtement, soit mâle, soit femelle, pour coopérer avec un moyen d'emboîtement complémentaire du premier module à placer en sortie de l'objectif.

### Revendications

1. Module porte-accessoires pour appareil optique du type appareil photographique, comprenant deux plaques (4, 5), des moyens (6) pour maintenir lesdites plaques sensiblement en regard l'une de l'autre et sensiblement parallèles entre elles, à une certaine distance l'une de l'autre pour former un espace réceptacle (16), chaque plaque comportant une ouverture (7, 8), les deux ouvertures étant sensiblement sur un même axe optique (9), des premiers moyens d'emboîtage mâles (11) et des seconds moyens d'emboîtage femelles (10) complémentaires desdits premiers moyens d'emboîtage mâles, lesdits premiers et seconds moyens d'emboîtage étant disposés respectivement sur chaque face (15, 19) desdites plaques (4, 5) tournée vers l'extérieur par rapport audit espace réceptacle (16), caractérisé par le fait qu'il comprend, en outre, des moyens (32, 33) de maintien élastiques longitudinaux situés respectivement sur les faces des deuxdites plaques tournées vers l'intérieur dudit réceptacle de façon à maintenir par pincement lesdits accessoires entre les deux plaques (4, 5) dans ledit espace réceptacle.

2. Module selon la revendication 1, caractérisé par le fait que lesdits moyens d'emboîtement mâles (11) comprennent une partie en saillie (14) située sur la face extérieure (15) d'une des deux plaques.

3. Module selon la revendication 2, caractérisé par le fait que les moyens d'emboîtement femelles (10) comprennent une gorge (18), ladite gorge (18) ayant une forme complémentaire de celle de ladite partie en saillie (14).

4. Module selon l'une des revendications 2 à 3, caractérisé par le fait que lesdites parties en saillie et gorge appartiennent à des formes circulaires sur au moins une portion angulaire.

5. Module selon la revendication 4, caractérisé par le fait que ladite portion angulaire est égale à 360 degrés.

6. Module selon l'une des revendications précédentes, caractérisé par le fait que les moyens longitudinaux (32, 33) de maintien élastique comportent au moins deux bourrelets, en regard l'un de l'autre, en définissant un espace légèrement inférieur à l'épaisseur desdits accessoires destinés à être placés dans ledit réceptacle, lesdites plaques étant réalisées dans un matériau résilient.

7. Module selon la revendication 6 caractérisé par le fait que lesdits bourrelets ont une longueur au moins égale à la longueur la plus grande desdites ouvertures.

8. Module selon l'une des revendications 6 ou 7 caractérisé par le fait qu'il comprend une deuxième paire de bourrelets symétriquement opposée à ladite première paire par rapport à l'axe optique (9).

9. Module selon la revendication 1 caractérisé par le fait que les moyens (6) de maintien des plaques (4, 5) définissent au moins une ouverture (21) apte à permettre l'introduction d'au moins un accessoire (34, 35, 36) en regard desdites ouvertures (7, 8).

## Claims

1. An accessory holder module for optical equipment of the camera type, the module comprising : two plates (4, 5) ; means (6) for holding said plates substantially parallel to each other and face-to-face at a certain distance apart to leave a receptacle space (16) ; each plate including an opening (7, 8), with the two openings being substantially on the same optical axis (9) ; and male first snap fastening means (11) and female second snap fastening means (10) complementary to said male first snap fastening means, said first and second snap fastening means being disposed on respective faces (15, 19) of said plates (4, 5) facing outwardly from said receptacle space (16) ; the module being characterized in that it further includes resilient longitudinal holding means (32, 33) situated on respective ones of the faces of said plates that face inwardly towards said receptacle so as to hold said accessories by clamping them between the two plates (4, 5) in said receptacle space.

2. A module according to claim 1, characterized by the fact that said male snap fastening means (11) include an outwardly projecting portion (14) situated on the outside face (15) of one of the two plates.

3. A module according to claim 2, characterized in that the female snap fastening means (10) include a groove (18), said groove being complementary in shape to said projecting portion (14).

4. A module according to claim 2 or 3, characterized by the fact that said projecting portion and said groove have circular shapes over at least a portion of an arc.

5. A module according to claim 4, characterized by the fact that said portion of an arc is equal to 360°.

6. A module according to any preceding claim, characterized by the fact that the longitudinal resilient holding means (32, 33) include at least two facing ribs defining a space which is slightly less than the thickness of said accessories for placing in said receptacle, said plates being made of a resilient material.

7. A module according to claim 6, characterized by the fact that said ribs are at least as long as the length of the longest of said openings.

8. A module according to claim 6 or 7, characterized by the fact that it includes a second pair of ribs symmetrically disposed to said first pair relative to the optical axis (9).

9. A module according to claim 1, characterized by the fact that the means (6) for holding the plates (4, 5) define at least one opening (21) suitable for enabling at least one accessory (34, 35, 36) to be inserted facing said openings (7, 8).

## Patentansprüche

1. Accessoiresträger-Modul für ein optisches Gerät vom Fotoapparatetyp, umfassend zwei Platten (4, 5), Mittel (6) zum Halten der genannten Platten im wesentlichen miteinander ausgefluchtet und im wesentlichen parallel zueinander in einem bestimmten Abstand voneinander zur Bildung eines Aufnahmeraums (16), wobei jede Platte eine Öffnung (7, 8) aufweist, welche beiden Öffnungen im wesentlichen auf derselben optischen Achse (9) liegen, mit ersten Vorsprungsfügemitteln (11) und zweiten Rücksprungsfügemitteln (10), komplementär zu den genannten ersten Vorsprungsfügemitteln, wobei die genannten ersten und zweiten Fügemittel jeweils auf einer Seite (15, 19) der genannten Platten (4, 5) angeordnet sind, bezüglich des genannten Aufnahmeraums (16) nach auswärts gekehrt, dadurch gekennzeichnet, daß er ferner Mittel (32, 33) für das elastische Halten in Längsrichtung umfaßt, jeweils auf den einwärts bezüglich des Aufnahmeraums gekehrten Seiten der Platten, derart, daß die genannten Accessoires zwischen den beiden Platten (4, 5) in dem genannten Aufnahmeraum klemmend gehalten werden.

2. Modul nach Anspruch 1, dadurch gekennzeichnet, daß die Vorsprungsfügemittel (11) eine vorspringende Partie (14) umfassen, ausgebildet auf der Außenseite (15) einer der beiden Platten.

3. Modul nach Anspruch 2, dadurch gekennzeichnet, daß die Rücksprungsfügemittel (10) eine Nut (18) umfassen, die eine zur Form der vorspringenden Partie (14) komplementäre Form aufweist.

4. Modul nach einem der Ansprüche 2 bis 3, dadurch gekennzeichnet, daß die genannte vorspringende Partie und Nut zu runden Formen auf mindestens einem Winkelabschnitt gehören.

5. Modul nach Anspruch 4, dadurch gekennzeichnet, daß der genannte Winkelabschnitt gleich 360° ist.

6. Modul nach einem der vorangehenden Ansprüche, dadurch gekennzeichnet, daß die elastischen Längshaltemittel (32, 33) mindestens zwei einander gegenüberstehende Stege umfassen, welche einen Raum begrenzen, der geringfügig kleiner ist als die Dicke der genannten Accessoires, die in den genannten Aufnahmeraum zu plazieren sind, wobei die genannten Platten aus einem nachgiebigen Material gefertigt sind.

7. Modul nach Anspruch 6, dadurch gekennzeichnet, daß die genannten Stege eine Länge aufweisen, die mindestens gleich der größten Länge der genannten Öffnungen ist.

8. Modul nach Anspruch 6 oder 7, dadurch gekennzeichnet, daß er ein zweites Paar von Stegen umfaßt, symmetrisch bezüglich der optischen Achse (9) gegenüber dem genannten ersten Paar.

9. Modul nach Anspruch 1, dadurch gekennzeichnet, daß die Mittel (6) zum Halten der Platten (4, 5) mindestens eine Öffnung (21) begrenzen, bestimmt zum Ermöglichen der Einführung mindestens eines Accessoires (34, 35, 36) in Ausfluchtung mit den genannten Öffnungen (7, 8).

Fig 1

Fig 2